# EUROPEAN PATENT APPLICATION

(11) **EP 3 828 712 A1**
(43) Date of publication of application: **02.06.2021**
(21) Application number: 18928297.3
(22) Date of filing: 22.08.2018
(51) Int. Cl.: G06F 11/30, G06F 9/44

(54) **DATA PARSING METHOD AND DEVICE**

(30) Priority: 31.07.2018 CN 201810855514
(71) Applicant: Wangsu Science & Technology Co., Ltd., Shanghai 200030 (CN)
(72) Inventor: ZHENG, Lifan, Shanghai 200030 (CN)
(74) Representative: de Arpe Fernandez, Manuel
(86) International application number: PCT/CN2018/101751
(87) International publication number: WO 2020/024342

(57) **Abstract**

The present disclosure provides a method and an apparatus of analyzing data. The method and apparatus are applied in a Grafana analysis system. The method includes: receiving an analysis task for a target data source, and generating an aggregation term process corresponding to the analysis task; generating a query string corresponding to the aggregation term process, the query string including a plurality of substrings and each substring matching each aggregation term in the aggregation term process; and analyzing the target data source by using the query string to obtain a query result of the target data source, the query result including an aggregation result of each substring; and traversing each aggregation result in the query result to obtain aggregation information of aggregation results and generating an analysis result of the analysis task based on the obtained aggregation information. The technical solution provided in the present disclosure can analyze the nested type data structure.

## Description

### FIELD OF THE DISCLOSURE

The present disclosure generally relates to the technical field of data processing, more particularly, relates to a method and an apparatus for analyzing data.

### BACKGROUND

With the continuous advancement in data processing technologies, the types of data that can be processed have continued to increase. Faced with various types of data, complex data may be queried, filtered, and analyzed using a data analysis system.

At the present, the Grafana analysis system is widely adapted in the field of data processing as it supports some of the current mainstream data sources. However, Grafana is unable to analyze data sources that contain nested type data structures. For example, a nested type data structure exists in an ElasticSearch data source. Since the ElasticSearch data source itself has the syntax of a nested type data structure, but the Grafana analysis system is unable to generate query strings for the nested type data structures by present configuration , therefore, the Grafana analysis system is unable to analyze ElasticSearch data source containing nested type data structures, which limits the usage of the Grafana analysis system.

### BRIEF SUMMARY OF THE DISCLOSURE

The purpose of the present disclosure is to provide a method and an apparatus for analyzing data, which may be used to analyze nested type data structures.

To achieve the purpose mentioned above, in one aspect, the present disclosure provides a method for analyzing data, applied in a Grafana analysis system and providing a first aggregation term for characterizing an entry into a nested type data structure and a second aggregation term for characterizing an exit of the nested type data structure. The method includes: receiving an analysis task for a target data source, and generating an aggregation term process corresponding to the analysis task; in particular, when analyzing the nested type data structure in the target data source, the first aggregation term is added in the aggregation term process, and when the analysis of the nested type data structure is completed, the second aggregation term is added in the aggregation term process; generating a query string corresponding to the aggregation term process, where the query string includes a plurality of substrings and each substring matches each aggregation term in the aggregation term process; and analyzing the target data source by using the query string to obtain a query result of the target data source, where the query result includes an aggregation result of each of the substrings; and traversing each aggregation result in the query result to obtain an aggregation information of the aggregation results and generating an analysis result of the analysis task based on the obtained aggregation information.

To achieve the purpose mentioned above, in another aspect, the present disclosure provides an apparatus for analyzing data, applied in a Grafana system. The apparatus includes an aggregation term creation unit for providing a first aggregation term for characterizing an entry into a nested type data structure and a second aggregation term for characterizing an exit of the nested type data structure; an aggregation term process generation unit for receiving an analysis task of a target data source, and generating the aggregation term process corresponding to the analysis task, where the first aggregation term is added in the aggregation term process when analyzing the nested type data structure in the target data source, and the second aggregation term is added in the aggregation term process when the analysis of the nested type data structure is completed; a query result acquisition unit for generating a query string corresponding to the aggregation term process, where the query string includes a plurality of substrings and each substring matches each aggregation term in the aggregation term process; and using the query string to analyze the target data source to obtain a query result of the target data source, where the query result includes an aggregation result of each substring; and a query result analysis unit for traversing each aggregation result in the query result to obtain aggregation information of the aggregation results, and generating an analysis result of the analysis task based on the obtained aggregation information.

As such, the technical solution provided in the present disclosure allows the first aggregation term for characterizing the entry into the nested type data structure and the second aggregation term for characterizing the exit of the nested type data structure to be added in advance to the aggregation terms built into the Grafana analysis system. In this case, when an analysis task to analyze a target data source containing nested type data structure is received, the aggregation term process corresponding to the analysis may be generated first. In the aggregation term process, the common process steps in the analysis task may be executed using the corresponding aggregation terms built into the Grafana analysis system, when analyzing the nested type data structure in the target data source, the first aggregation term may be added in the aggregation term process, and when the analysis of the nested type data structure is completed, the second aggregation term may be added in the aggregation term process. Therefore, in addition to the regular aggregation terms, the aggregation term process may include the first aggregation term and the second aggregation term for the nest class data structure. Subsequently, based on the aggregation term process, the corresponding query string may be generated. More specifically, the aggregation term process may include various aggregation terms, so when generating the query string, the substring of each aggregation term may be generated one by one based on the syntax of ElasticSearch. Since the syntax of ElasticSearch supports the syntax of the nested type data structure, the substrings corresponding to the first aggregation term and the second aggregation term mentioned above may also be generated normally, and the substrings may form the query string described above. Subsequently, the query string may be executed on the target data source so the corresponding query result may be obtained. Further, when the query string is executed, each of the substrings may be executed separately to obtain the aggregation results corresponding to the respective substrings, and these aggregation results may be used to form the query result mentioned above. However, since the query result is consistent with the query condition and it has the nested type data structure, the Grafana analysis system cannot directly identify the content in the query result. Therefore, in the present disclosure, each aggregation result in the query result may be traversed and the aggregation information corresponding to each aggregation result may be obtained. In the end, the aggregation information may be summarized to obtain the analysis result corresponding to the analysis task. It should be apparent that the present disclosure expands the use of the Grafana analysis system by adding additional aggregation terms and traversing the aggregation results, so the Grafana analysis system may be able to analyze the nested type data structure.

### BRIEF DESCRIPTION OF THE DRAWINGS

To more clearly illustrate the technical solutions of the present disclosure, the accompanying drawings to be used in the description of the disclosed embodiments are briefly described hereinafter. Obviously, the drawings described below are merely some embodiments of the present disclosure. Other drawings derived from such drawings may be obtained by a person having ordinary skill in the art without creative labor.
FIG. 1 illustrates a schematic diagram of a method for analyzing data according to an embodiment of the present disclosure;
FIG. 2 illustrates a flowchart of logical steps according to an embodiment of the present disclosure;
FIG. 3 illustrates a schematic flowchart of traversing an aggregation result according to an embodiment of the present disclosure; and
FIG. 4 illustrates a schematic diagram of functional blocks of a data analysis apparatus according to an embodiment of the present disclosure.

### DETAILED DESCRIPTION

To more clearly describe the objectives, technical solutions and advantages of the present disclosure, the present disclosure is further illustrated in detail with reference to the accompanying drawings in conjunction with embodiments of the present disclosure.

### Embodiment 1

The present disclosure provides a method for analyzing data, which may be applied to a Grafana analysis system. In the Grafana analysis system, the processing of data querying, filtering, analyzing, etc. may be completed by an aggregation term. Further, in the Grafana analysis system, a large number of aggregation terms may be built-in in advance, and these aggregation terms may perform functions such as filtering data in a certain period of time, grouping data according to categories, and counting the number of data occurrences. However, there are no aggregated terms for nested type data structures in the Grafana analysis system. In the present embodiment, a first aggregation term for characterizing an entry into the nested type data structure and a second aggregation term for characterizing an exit of the nested type data structure may be additionally included by customizing the aggregation terms in the Grafana analysis system. Hence, when facing the nested type data structure, the first aggregation term and the second aggregation term mentioned above may be selected in the Grafana analysis system to enter and exit the nested type data structure.

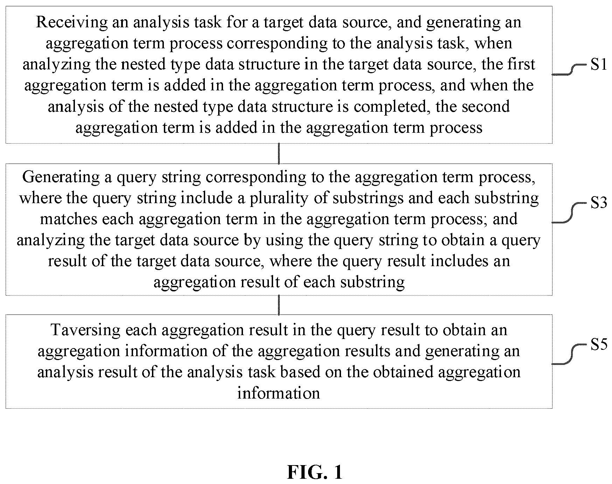

Referring to FIG. 1, the method for analyzing data provided in the present disclosure may include the following steps.

S1: receiving an analysis task for a target data source, and generating an aggregation term process corresponding to the analysis task; in particular, when analyzing the nested type data structure in the target data source, the first aggregation term may be added in the aggregation term process, and when the analysis of the nested type data structure is completed, the second aggregation term may be added in the aggregation term process.

In the present embodiment, the target data source may be a data source to be analyzed, and the target data source may include a large number of information and some of the information may have a nested type data structure. For example, the target data source may be book checkout data as shown in Table 1.

**Table 1: Book Checkout Data**

| Date | Book Checkout Information | | Book Classification |
|---|---|---|---|
| 2018-01-01 | Title | Number of Checkout | Finance |
| | Financial Politics | 100 | |
| | Security Analysis | 78 | |
| | Equity Analysis | 50 | |
| | Value Investment | 3 | |
| 2018-01-02 | Title | Number of Checkout | Politics |
| | The Communist Manifesto | 1221 | |
| | Old System and Revolution | 60 | |
| | The Communist Manifesto | 80 | |
| | Zhu Rongji's Answers to the Reporters | 42 | |

As shown in Table 1, in the target source data, the data in the book checkout information includes a nested type data structure. The nesting of the title and the number of checkouts is included in the book checkout information.

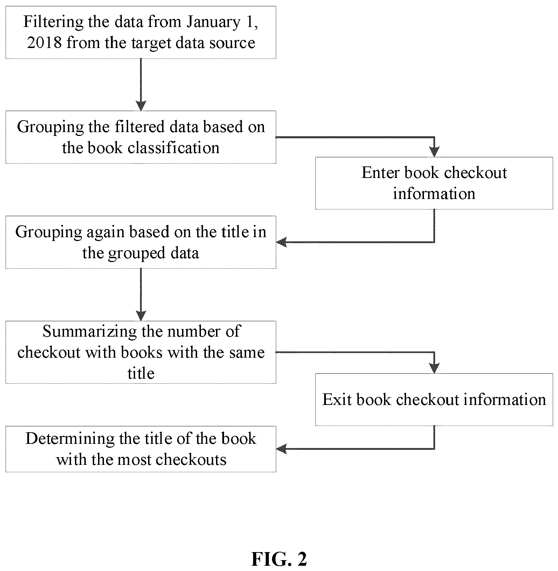

In the present embodiment, in view of the target data source, the user may submit an analysis task to the Grafana analysis system, and the analysis task may be, "counting the title with greatest number of checkouts in each book classification on January 1, 2018." After receiving the analysis task, the Grafana analysis system may generate an aggregation term process corresponding to the analysis task. More specifically, when generating the aggregation term process, a plurality of logical steps needed to perform the analysis task may be determined first. For example, the logical steps as shown in FIG. 2 may be determined for the analysis task mentioned above. In particular, the first logical step may be "filtering the data from January 1, 2018 from the target data source", the second logical step may be "grouping the filtered data based on the book classification", the third logical step may be "grouping again based on the title in the grouped data", the fourth logical step may be "summarizing the number of checkout with books with the same title", and the last logical step may be "determining the title of the book with the most checkouts". These logical steps may be sorted from top to bottom based on their order to execution. However, since the data in the book checkout information includes a nested type data structure, Grafana will not be able to directly process the data in the book checkout information. Therefore, as shown in FIG. 2, when analyzing the data in the book checkout information, a logical step of "entering book checkout information" may need to be added between the second logical step and the third logical step described above. In addition, after the analysis of the book checkout information is completed, a logical step of "exiting the book checkout information" may be added between the fourth logical step and the last logical step. Thus, the overall logical steps may be as shown in FIG. 2.

In the present embodiment, after determining the logical steps required to execute the analysis task, the aggregation term corresponding to each logical step may be selected in the Grafana analysis system. In particular, the subsequently added logical steps may correspond to the steps of entering and exiting the nested type data structure. Therefore, for these two logical steps, the first aggregation term and the second aggregation term may be selected respectively. That is, when analyzing the nested type data structure in the target data source, the first aggregation term may be added in the aggregation term process, and when the analysis of the nested type data structure is completed, the second aggregation term may be added in the aggregation term process. Further, the other logical steps may be expressed by the normal aggregation terms in the Grafana analysis system. In this way, the selected aggregation terms may be used to form the aggregation term process corresponding to the analysis task based on the order of the selected aggregation terms, and each aggregation term in the aggregation term process may have a one-to-one correspondence with each of the above logical steps.

S3: generating a query string corresponding to the aggregation term process, where the query string includes a plurality of substrings and each substring matches each of the aggregation terms in the aggregation term process; and analyzing the target data source by using the query string to obtain a query result of the target data source, where the query result includes an aggregation result of each of the substrings.

In the present embodiment, after determining the aggregation term process, the corresponding substrings may be generated for each aggregation term in the aggregation term process based on the syntax of ElasticSearch. Since the syntax of ElasticSearch supports the nested type data structure, the respective substrings of the first aggregation term and the second aggregation term may be normally generated. Subsequently, the generated substrings may be sorted based on the order in which the aggregation terms are arranged in the aggregation term process, thereby maintaining the logical relationship of each substring. In this way, the sorted substrings may be used as the query string corresponding to the aggregation term process.

In the present embodiment, each aggregation term in the Grafana analysis system may have a unique identifier, and the substrings generated from the aggregation terms may also be unique as they may use the unique identifiers of the aggregation terms. Therefore, in the query string, each substring may have its own unique identifier, and the corresponding substring may be identified by the unique identifier.

In the present embodiment, after generating the query string, the query string may be executed on the target data source to obtain the query result of the target data source. When the query string is executed, each substring may be sequentially executed on the target data source based on the order of the substrings in the query string. Further, each time a substring is executed, a corresponding aggregation result may be obtained. Thus, after executing the query string, a query result composed of a plurality of aggregation results may be obtained. Since each substring in the query string has a unique identifier, in order to distinguish the plurality of aggregation results in the query result, the unique identifier of the substring may be assigned to the corresponding aggregation result, so the aggregation result of a substring in the query result may carry the unique identifier of the substring.

S5: traversing each aggregation result in the query result to obtain an aggregation information of the aggregation results and generating an analysis result of the analysis task based on the obtained aggregation information.

In the present embodiment, after obtaining the query result, since the original query string is generated based on the nested type data structure, the obtained query structure may also have the nested type data structure. However, since the Grafana analysis system cannot analyze the query result in the nested type, an analysis method for the query result in the nested type may be required in the present embodiment.

After obtaining the query result, since there is a nested relationship between the aggregation results in the query result, each aggregation result may be analyzed one by one from the outside to the inside to obtain the final analysis result. More specifically, each aggregation result may have its own aggregation information, which may correspond to different meanings based on the location of the aggregation result. For example, after obtaining the query result through the logical steps in FIG. 2, the aggregation results in the query structure may in fact correspond to logical steps in a one-to-one relationship. Thus, for the logical step of "filtering the data from January 1, 2018 from the target data source", the corresponding aggregation result may be data with a checkout time of January 1, 2018, and the aggregation information of the aggregation result may be "January 1, 2018". Further, for the logical step of "grouping the filtered data based on the book classification", the aggregation information of the corresponding aggregation result may be a grouped book classification, for example, the aggregation information may be "Finance" in Table 1. Furthermore, for the last logical step of "determining the title of the book with the most checkouts", the aggregation information of the corresponding aggregation result may be "Financial Politics" and the value "100" in Table 1. Therefore, if the current aggregation result is not the last aggregation result in the query result, the aggregation information of the current aggregation result may be used to describe the type of the aggregation result. For example, the type may be the time "January 1, 2018" and the book classification "Finance" mentioned above. In addition, if the current aggregation result is the last aggregation result in the query result, the aggregation information of the aggregation result may usually be represented by a value, for example, the aggregation information may be the value "100" mentioned above, which represents the highest checkout count.

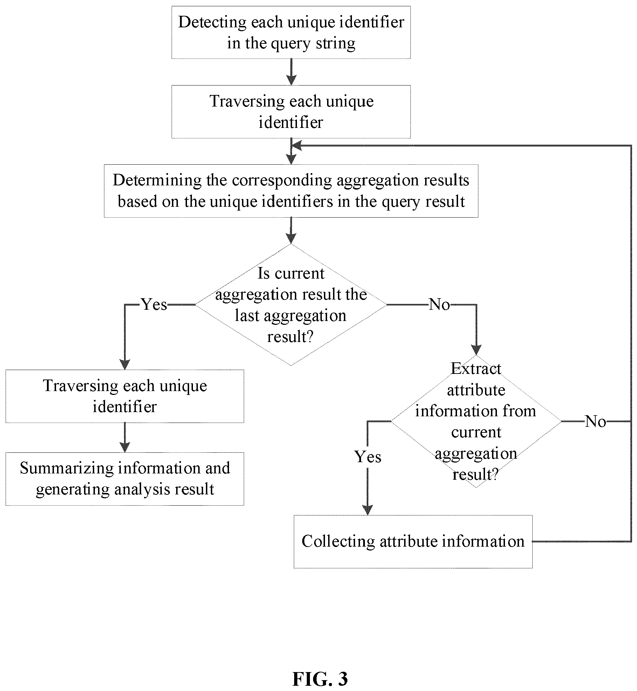

Therefore, referring to FIG. 3, in the present embodiment, the unique identifier of each substring in the query string may be detected first, and then the detected unique identifiers may be traversed, thereby extracting the aggregation information from the aggregation results carrying the unique identifiers. More specifically, with the current unique identifier, the current aggregation result carrying the current unique identifier may be identified from the query result. Subsequently, whether the current aggregation result is the last result in the query result may be determined. If the current aggregation result is not the last result in the query result, an attribute information in the current aggregation result may be collected, where the attribute information may be, for example, information for describing the type of aggregation result described above. Of course, it should be noted that prior to collecting the attribute information, it may also be possible to determine whether there is any attribute information to be collected in the aggregation result, and if so, the attribute information may be collected. In some cases, some aggregation results may not include attribute information. For example, the attribute information may not be included in the aggregation results corresponding to the first aggregation term and the second aggregation term.

In the present embodiment, after the collection of the attribute information of the current aggregation result is completed, the next unique identifier may be analyzed. Using the same process, whether the aggregation result corresponding to the next unique identifier is the last aggregation result may be determined. If the aggregation result corresponding to the next unique identifier is still not the last aggregation result, it may be handled using process described above. On the other hand, if the aggregation result corresponding to the next unique identifier is the last aggregation result, then the aggregation result will usually include a value to represent a count. In this case, an aggregation value representing the count may be identified from the current aggregation result, and the aggregation value may be used as the aggregation information of the current aggregation result.

In the present embodiment, after obtaining the aggregation information of each aggregation result, each of the aggregation information may be summarized in the order in which the aggregation information is obtained, and the summarized aggregation information may be used as the analysis result of the analysis task. For example, in the example of the book title with the most number of checkouts mentioned above, the final analysis result may be "the book with the most number of checkouts in the Finance book classification is the Financial Politics and the checkout count is 100". Of course, in practice, based on the different forms of analysis result, the analysis result may be expressed as a text, a chart, or in other forms. The present disclosure does not limit the form of the analysis result.

### Embodiment 2

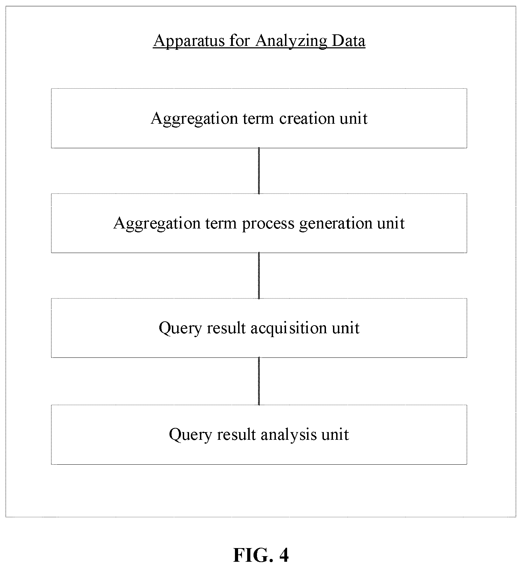

Referring to FIG. 4, the present disclosure also provides a data analysis apparatus that may be used in the Grafana analysis system mentioned above. The apparatus includes:

an aggregation term creation unit for providing a first aggregation term for characterizing an entry into a nested type data structure and a second aggregation term for characterizing an exit of the nested type data structure;

an aggregation term process generation unit for receiving the analysis task of the target data source, and generating an aggregation term process corresponding to the analysis task, where the first aggregation term may be added in the aggregation term process when analyzing the nested type data structure in the target data source, and the second aggregation term may be added in the aggregation term process when the analysis of the nested type data structure is completed;

a query result acquisition unit for generating a query string corresponding to the aggregation term process, where the query string may include a substring matching each aggregation term in the aggregation term process; and using the query string to analyze the target data source to obtain the query result of the target data source, where the query result may include the aggregation result of each substring; and

a query result analysis unit for traversing each aggregation result in the query result to obtain an aggregation information of the aggregation results, and generating the analysis result of the analysis task based on the obtained aggregation information.

In one embodiment, the substrings in the query string may include unique identifiers and the aggregation results of the substrings in the query result may carry the unique identifiers. Correspondingly, the query result analysis unit may include:
an identification traversal module for detecting the unique identifier of each substring in the query string and traversing the detected unique identifier;
an aggregation result identification module for identifying a current aggregation result carrying the current unique identifier in the query result; and
an aggregation information collection module for determining whether the current aggregation result is the last result in the query result, if it is not, collects an attribute information in the current aggregation result and uses the attribute information as the aggregation information of the aggregation result, where the attribute information may be used to describe the type of the aggregation result.

In one embodiment, the query result analysis unit may further include:
an aggregation value identification module for identifying an aggregation value in the current aggregation result and using the aggregation value as the aggregation information of the current aggregation result if the current aggregation result is the last result in the query result.

In this manner, the technical solution provided in the present disclosure allows the first aggregation term for characterizing the entry into the nested type data structure and the second aggregation term for characterizing the exit of the nested type data structure to be added in advance to the aggregation terms built into the Grafana analysis system. In this case, when the analysis task for target data source containing nested type data structure is received, the aggregation term process corresponding to the analysis may be generated first. In the aggregation term process, the common process steps in the analysis task may be executed using the corresponding aggregation terms built into the Grafana analysis system, when analyzing the nested type data structure in the target data source, the first aggregation term may be added in the aggregation term process, and when the second aggregation term may be added in the aggregation term process when the analysis of the nested type data structure is completed. Therefore, in addition to the regular aggregation terms, the aggregation term process may include the first aggregation term and the second aggregation term for the nest class data structure. Subsequently, based on the aggregation term process, the corresponding query string may be generated. More specifically, the aggregation term process may include various aggregation terms, so when generating the query string, the substring of each aggregation term may be generated one by one based on the syntax of ElasticSearch. Since the syntax of ElasticSearch supports the syntax of the nested type data structure, the substrings corresponding to the first aggregation term and the second aggregation term mentioned above may also be generated normally, and the substrings may form the query string described above. Subsequently, the query sting may be executed on the target data source so the corresponding query result may be obtained. Further, when the query string is executed, each of the substrings may be executed separately to obtain the aggregation results corresponding to the respective substrings, and these aggregation results may be used to form the query result mentioned above. However, since the query result is consistent with the query condition and it has the nested type data structure, the Grafana analysis system cannot directly identify the content in the query result. Therefore, in the present disclosure, each aggregation result in the query result may be traversed and the aggregation information corresponding to each aggregation result may be obtained. In the end, the aggregation information may be summarized to obtain the analysis result corresponding to the analysis task. It should be apparent that the present disclosure expands the use of the Grafana analysis system by adding additional aggregation terms and traversing the aggregation results, so the Grafana analysis system may analyze the nested type data structure.

Through the descriptions of aforementioned embodiments, those skilled in the art may clearly understand that the embodiments may be implemented by means of software in conjunction with an essential common hardware platform or may be simply implemented by hardware. Based on such understanding, the essential part of the aforementioned technical solutions or the part that contribute to the prior art may be embodied in the form of software products. The software products may be stored in computer readable storage media, such as ROM/RAM, magnetic disk, and optical disk, and may include a plurality of instructions to enable a processor of a computer device (may be a personal computer, a server, or a network device) to execute the methods described in various embodiments or parts of the embodiments.

The foregoing are merely certain preferred embodiments of the present disclosure, and are not intended to limit the present disclosure. Without departing from the spirit and principles of the present disclosure, any modifications, equivalent substitutions, and improvements, etc. shall fall within the scope of the present disclosure.

## Claims

1. A method for analyzing data, the method being applied in a Grafana analysis system and providing a first aggregation term for characterizing an entry into a nested type data structure and a second aggregation term for characterizing an exit of the nested type data structure, the method comprising:
receiving an analysis task for a target data source, and generating an aggregation term process corresponding to the analysis task; wherein when analyzing the nested type data structure in the target data source, the first aggregation term is added in the aggregation term process, and when the analysis of the nested type data structure is completed, the second aggregation term is added in the aggregation term process;
generating a query string corresponding to the aggregation term process, wherein the query string includes a plurality of substrings and each substring matches each aggregation term in the aggregation term process, and analyzing the target data source by using the query string to obtain a query result of the target data source, wherein the query result includes an aggregation result of each substring; and
traversing each aggregation result in the query result to obtain aggregation information of aggregation results and generating an analysis result of the analysis task based on the obtained aggregation information.

2. The method according to claim 1, wherein generating the aggregation term process corresponding to the analysis task includes:
determining a plurality of logical steps needed to perform the analysis task, wherein plurality of logical steps is sorted in an order of execution; and
selecting an aggregation term corresponding to each logical step and forming the aggregation term process corresponding to the analysis task by using selected aggregation terms based on an order for selecting the aggregation term.

3. The method according to claim 1, wherein generating the query string corresponding to the aggregation term process includes:
generating a substring corresponding to each aggregation term in the aggregation term process and sorting generated substrings in an order by which aggregation terms are arranged in the aggregation term process; and
using the sorted substrings as the query string corresponding to the aggregation term process.

4. The method according to claim 1, wherein analyzing the target data source by using the query string to obtain the query result of the target data source includes:
sequentially executing each substring for the target data source in an order of each substring being arranged in the query string to obtain the aggregation result corresponding to each substring, and using the aggregation result corresponding to each substring as the query result of the target data source.

5. The method according to claim 1, wherein each substring in the query string includes a unique identifier and the aggregation results of the substrings in the query result carry the unique identifiers; and traversing each aggregation result in the query result to obtain the aggregation information of the aggregation results includes:
detecting the unique identifier of each substring in the query string and traversing the detected unique identifier;
for a current unique identifier, identifying a current aggregation result carrying the current unique identifier from the query result; and
determining whether the current aggregation result is a last result in the query result, if it is not, collecting attribute information in the current aggregation result and using the attribute information as the aggregation information of the aggregation result, wherein the attribute information is used to describe a type of the aggregation result.

6. The method according to claim 5, further comprising:
identifying an aggregation value in the current aggregation result and using the aggregation value as the aggregation information of the current aggregation result if the current aggregation result is the last result in the query result.

7. The method according to claim 1, wherein generating the analysis result of the analysis task based on the obtained aggregation information includes:
summarizing each aggregation information in an order by which the aggregation information is obtained, and using the summarized aggregation information as the analysis result of the analysis task.

8. A computer device for analyzing data in a Grafana analysis system, comprising:
a processor and a computer readable storage media for storing instructions, wherein when the instructions being executed, the processor is configured for:
providing a first aggregation term for characterizing an entry into a nested type data structure and a second aggregation term for characterizing an exit of the nested type data structure;
receiving an analysis task of a target data source, and generating the aggregation term process corresponding to the analysis task, wherein the first aggregation term is added in the aggregation term process when analyzing the nested type data structure in the target data source, and the second aggregation term is added in the aggregation term process when the analysis of the nested type data structure is completed;
generating a query string corresponding to the aggregation term process, wherein the query string includes a plurality of substrings and each substring matches each aggregation term in the aggregation term process; and using the query string to analyze the target data source to obtain a query result of the target data source, wherein the query result includes an aggregation result of each substring; and
traversing each aggregation result in the query result to obtain aggregation information of aggregation results, and generating an analysis result of the analysis task based on the obtained aggregation information.

9. The device according to claim 8, wherein each substring in the query string includes a unique identifier and the aggregation results of the substrings in the query result carry the unique identifiers; and the processor is further configured for:
detecting the unique identifier of each substring in the query string and traversing the detected unique identifier;
identifying a current aggregation result carrying a current unique identifier from the query result; and,
determining whether the current aggregation result is a last result in the query result, if it is not, collecting attribute information in the current aggregation result and using the attribute information as the aggregation information of the aggregation result, wherein the attribute information is used to describe a type of the aggregation result.

10. The device according to claim 9, wherein the processor is further configured for:
identifying an aggregation value in the current aggregation result and using the aggregation value as the aggregation information of the current aggregation result if the current aggregation result is the last result in the query result.
